(19) Europäisches Patentamt / European Patent Office / Office européen des brevets

(11) **EP 2 066 544 B1**

(12) **EUROPÄISCHE PATENTSCHRIFT**

(45) Veröffentlichungstag und Bekanntmachung des Hinweises auf die Patenterteilung:
**01.05.2013  Patentblatt 2013/18**

(51) Int Cl.:
*G08G 1/16* (2006.01)          *B60T 7/22* (2006.01)
*B62D 15/02* (2006.01)

(21) Anmeldenummer: **07803425.3**

(22) Anmeldetag: **12.09.2007**

(86) Internationale Anmeldenummer:
**PCT/EP2007/059561**

(87) Internationale Veröffentlichungsnummer:
**WO 2008/031837 (20.03.2008 Gazette 2008/12)**

(54) **VERFAHREN ZUM ERKENNEN EINER FAHRTRICHTUNG IN EINEM KRAFTFAHRZEUG**

METHOD FOR DETERMINING DIRECTION OF TRAVEL IN A MOTOR VEHICLE

PROCÉDÉ DE RECONNAISSANCE D'UN SENS DE DÉPLACEMENT DANS UN VÉHICULE AUTOMOBILE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **12.09.2006  DE 102006043511**
**12.09.2007  DE 102007043419**

(43) Veröffentlichungstag der Anmeldung:
**10.06.2009  Patentblatt 2009/24**

(73) Patentinhaber: **Continental Teves AG & Co. OHG 60488 Frankfurt (DE)**

(72) Erfinder:
• **HERCHENRÖDER, Uwe**
  **83546 Hammersbach (DE)**
• **VAN DER VEGTE, Peter**
  **88046 Friedrichshafen (DE)**
• **OLSHANSKY, Yuri**
  **65812 Bad Soden (DE)**
• **GROITZSCH, Stephan**
  **69469 Weinheim (DE)**

(56) Entgegenhaltungen:
**EP-A- 0 492 642          EP-A- 1 010 596
WO-A-02/062640          WO-A-2006/042512
DE-A1- 10 220 566        DE-A1-102005 003 194
GB-A- 2 004 158          US-A- 3 176 294**

**Beschreibung**

Die Erfindung betrifft ein Verfahren zum Erkennen einer Fahrtrichtung in einem Kraftfahrzeug.

**Hintergrund der Erfindung**

Moderne Kraftfahrzeuge verfügen teilweise bereits über Sicherheitssysteme, die in Fahrsituationen, in denen es zu einer Kollision mit einem Umfeldobjekt kommen könnte, Sicherheitsmittel ansteuern, welche den Fahrer auf die Gefahr aufmerksam machen, mittels derer kollisionsvermeidende Eingriffe in das Fahrverhalten des Fahrzeugs vorgenommen werden können und/oder welche die passive Sicherheit erhöhen, d.h. mögliche Unfallfolgen für die Fahrzeuginsassen reduzieren. Grundlage für die Ansteuerung der Sicherheitssysteme ist eine Erfassung der aktuellen Fahrsituation mittels einer geeigneten Umfeldsensorik und eine elektronische Auswertung der erfassten Daten im Hinblick auf die Gefahr von Kollisionen zwischen dem Fahrzeug und den erfassten Objekten. Dabei besteht oftmals das Problem, dass die Fahrsituation anhand der erfassten Daten der im Umfeld des Fahrzeugs befindlichen Objekte nicht korrekt analysiert wird. Hierdurch kann es zu Fehlauslösungen der Sicherheitsmittel kommen, die zu einer Beeinträchtigung des Fahrkomforts und - wie beispielsweise im Falle eines unnötigen Bremsvorgangs - zu einer Gefährdung der Fahrsicherheit führen können.

Zur Erkennung einer Fahrtrichtung eines Kraftfahrzeugs werden im Kraftfahrzeug vorhandene Sensoren verwendet, um Mehrkosten zu vermeiden. Sicherheitssysteme, wie Fahrstabilitätsregelungen und Insassenschutzsysteme, für ein Kraftfahrzeug mit mindestens vier Rädern weisen einen Sensor, der ein Giergeschwindigkeitssignal erzeugt, einen Sensor, der ein Querbeschleunigungssignal erzeugt, einen Sensor, der ein Lenkwinkelsignal erzeugt, Raddrehzahlsensoren, die Drehbewegungssignale der Räder erzeugen, einen Sensor, der ein Längsbeschleunigungssignal erzeugt, auf, die mit einem Antiblockier-Regelsystem und einem Antriebsschlupf-Regelsystem und einem Giermoment-Regelsystem, einem Airbag-System, einem Sicherheitsgurt-System verbunden sein können. Die Sicherheitseinrichtungen können auf die Radbremsen der Bremsanlage und/oder das Lenksystem des Kraftfahrzeugs einwirken.

Die meisten heute in Serie eingesetzten Raddrehzahlsensoren liefern nur eine Information über den Betrag der Raddrehzahl, aus dem keine Fahrtrichtung abgeleitet werden kann. Raddrehzahlsensoren mit denen eine Drehrichtung erkannt werden kann sind zwar bekannt, werden aufgrund der Mehrkosten in Serienfahrzeugen aber selten eingesetzt.

Da die Information der Fahrtrichtung aber für Fahrstabiltätsregelungen bzw. Fahrerassistenzsysteme von großer Wichtigkeit ist, wird diese aus anderen vorhandenen Größen generiert. Beispielsweise muss ein Eingriff des Giermoment-Regelsystems bei Rückwärtsfahrt vermieden werden, um eine Fehlauslösung der Aktuatoren auszuschließen. Die Erkennung einer Rückwärtsfahrt in dem Giermoment-Regelsystemen (ESP-Systemen) erfolgt ausschließlich bei einer Kurvenfahrt, da bei einer Geradeausfahrt die Gierwinkelgeschwindigkeit $\dot\psi$ sich kaum von Null unterscheidet und somit ein Regeleingriff nicht vorgenommen werden kann. Eine Rückwärtsfahrt wird ermittelt, indem die gemessene Gierwinkelgeschwindigkeit $\dot\psi_{Mess}$ mit einer in einem Fahrzeugmodell ermittelten Soll-Gierwinkelgeschwindigkeit $\dot\psi_{Soll}$ verglichen wird. Sind die Vorzeichen entgegengesetzt und gilt dies auch für die zeitlichen Ableitungen der beiden Größen, die Gierbeschleunigungen, so befindet sich das Fahrzeug in einer rückwärts durchfahrenen Kurve. Neben der Gierwinkelgeschwindigkeit gehen dabei die Größen des Querbeschleunigungssensors und des Lenkwinkelsensors in die Rückwärtsfahrterkennung ein(DE 195 15 048 A1) .

Auch für ein präventiv wirkendes unfallvermeidendes Schutzsystem zur Früherkennung von Kraftfahrzeugkollisionen, welches Umfeldsensorik verwendet, ist eine Erkennung einer Rückwärtsfahrt notwendig um Fehlregelungen zu vermeiden. Präventiv wirkende Schutzsysteme, mittels denen Unfälle vermieden bzw. die Folgen von Unfällen vermindert werden, führen dabei in der Regel die folgenden grundsätzlichen Schritte aus:

a)Erkennen eines Objekts vor dem Fahrzeug in Richtung des Fahrzeugs,
b)Ermitteln eines möglichen Kontaktes des Fahrzeugs mit dem Objekt in Abhängigkeit von der relativen Position zueinander,
c) Vorbereiten bzw. Auslösen eines fahrerunabhängigen Bremsoder Lenkvorganges in Abhängigkeit von dem Ermittlungsergebnis bzgl. eines möglichen Kontakts mit dem Objekt.

Dabei ist z.B. ein fahrerunabhängiger, automatischer Bremseneingriff bzw. eine Verminderung des Betrages der Fahrzueggeschwindigkeit bei einem sich von vorne nähernden Objekt während Rückwärtsfahrt kontraproduktiv. Eine derartige Situation kann z.B. dann eintreten, wenn ein Kraftfahrzeug rückwärts bergabwärts fährt, während sich ihm von vorne ein Fahrzeug mit höherer Geschwindigkeit nähert.

Diese Situation kann durch die oben beschriebene Erkennung der Rückwärtsfahrt bei einem Giermoment-Regelsystem nicht verhindert werden, da eine Kurvenfahrt des Kraftfahrzeugs Vorraussetzung zur Erkennung einer Rückwärtsfahrt ist. Die beschriebene Fehlauslösung kann aber bei einem präventiv wirkenden Schutzsystem zur Früherkennung von Kraftfahrzeugkollisionen auch bei Rückwärtsfahrt geradeaus auftreten.

Die Erkennung ist für ein Kraftfahrzeug mit einem präventiv wirkenden unfallvermeidenden Schutzsystem vorgesehen, welches mehrere Sicherheitseinrichtungen, insbesondere auch Fahrstabilitätseinrichtungen sowie Insassenschutzeinrichtungen umfasst, wobei die Sicherheits- und Insassenschutzeinrichtungen von wenigstens einer die Fahrzeugumgebung erkennenden Umfeldsensorik zur Früherkennung von Kraftfahrzeugkollisionen angesteuert werden können. Als Sensoren zur Umfelderfassung können Radar- und/oder Infrarotsensoren sowie Kamerasysteme einzeln oder kombiniert verwendet werden.

Die WO2006/042512A1 offenbart ein Verfahren zur Bestimmung relevanter Objekte im Nahbereich eines Kraftfahrzeugs mit einem Umgebungserfassungssensor. Hierbei werden nur Objekte als relevant klassifiziert, mit denen trotz einer durchschnittlichen Fahrerreaktion wie eines Ausweichmanövers und/oder Bremsvorgangs eine Kollision mit großer Wahrscheinlichkeit eintritt. Dazu wird eine Kollisionswahrscheinlichkeit in Abhängigkeit von zumindest zwei aus Fahrzeug- und Umgebungsdaten berechneten Werten bestimmt. Ein erster Wert beschreibt ein zukünftiges oder ein bereits eingeleitetes Ausweichmanöver und ein zweiter Wert einen Verzögerungsvorgang. Jeder der zumindest zwei Werte wird durch einen Schwellwert begrenzt, der den Beginn eines kritischen Bereichs anzeigt. Eine Aktivierung der Bremsmittel wird eingeleitet, wenn sich zumindest einer der ermittelten Werte in einem kritischen Bereich bewegt. Das Verfahren wird bei einer Rückwärtsfahren abgebrochen.

Die DE 102 20 566 A1 beschreibt ein Verfahren zur automatischen Notbremsung eines Fahrzeugs, das eine Sensorik zur Fahrzeugumgebungserfassung einsetzt und beim Rückwärtsfahren eine Auslösung einer Notbremsung unterbindet. Das Rückwärtsfahren wird anhand der gewählten Getriebestufe erkannt.

Aus der US 3,176,294 geht ein Fahrzeugradarsystem hervor, bei dem kein automatischer Bremsvorgang eingeleitet wird, wenn sich das Fahrzeug von einem Hindernis mit einer relativen Rückwärtsbewegung wegbewegt.

Auch bei dem aus der EP 1010596A2 bekannten Sicherheitssystem, das ein die Fahrzeugbremse auslösendes Bremssignal erzeugen kann, wird beim Rückwärtsfahren die automatische Bremsenauslösung abgeschaltet. Das Rückwärtsfahren wird durch Prüfen, ob der Rückwärtsgang eingelegt ist, erkannt.

## Darstellung der Erfindung

Es wäre daher wünschenswert wenn auch für präventiv wirkende Schutzsysteme zur Früherkennung von Kraftfahrzeugkollisionen, welche Umfeldsensorik zur Erfassung des Kraftfahrzeugumfeldes verwenden, eine Rückwärtsfahrterkennung auf Basis vorhandener Signale vorhanden wäre.

Der Erfindung liegt die Aufgabe zugrunde, bei einem präventiv wirkenden unfallvermeidenden Schutzsystem zur Früherkennung von Kraftfahrzeugkollisionen, welches Umfeldsensorik zur Erfassung des Kraftfahrzeugumfeldes verwendet, eine Erkennung einer Rückwärtsfahrt auf Basis vorhandener Sensorsignale zu schaffen.

Dieses Problem wird hinsichtlich eines Verfahrens der gattungsgemäßen Art erfindungsgemäß durch die Merkmale der unabhängigen Ansprüche gelöst. Weitere vorteilhafte Ausbildungen der Erfindung sind in den Unteransprüchen angegeben.

Vorteilhaft wird erfindungsgemäß die Fahrtrichtung des Fahrzeugs mit dem präventiv wirkenden unfallvermeidenden Schutzsystem oder einem mit dem unfallvermeidenden Schutzsystem verbundenen Sicherheitssystem ermittelt und wenn eine Rückwärtsfahrt erkannt ist, wird das präventiv wirkende Schutzsystem deaktiviert. Damit wird ein fahrerunabhängiger selbsttätiger Brems- und/oder Lenkvorgang verhindert oder abgebrochen. Durch die Erfindung wird die Rückwärtsfahrterkennung einem präventiv wirkenden unfallvermeidenden Schutzsystem zugeordnet, welches die eigene Fahrsituation ermittelt oder Informationen über die eigene Fahrsituation erhält und dabei die Relativgeschwindigkeit oder die Relativposition zu einem möglichen Kollisionsobjekt zu der eigenen Fahrsituation in Bezug setzt. Dabei kann auch ein mit dem unfallvermeidenden Schutzsystem verbundenes Sicherheitssystem die Rückwärtsfahrt des Fahrzeugs ermitteln, wobei das verbundene Sicherheitssystem intern oder extern vom Fahrzeug angeordnet sein kann und leitungsgebunden oder drahtlos mit dem unfallvermeidenden Schutzsystem kommuniziert.

Vorteilhaft wird eine Rückwärtsfahrerkennung anhand von Signalen eines Beschleunigungssensors und/oder eines Umfeldsensors erkannt, die Bestandteil von präventiv wirkenden unfallvermeidenden Schutzsystemen oder anderen Sicherheits- und/oder Insassenschutzsystemen und/oder Fahrerassistenzsystemen sind. So ist es auch vorteilhaft möglich die Umfeldsensorik anderer Verkehrsteilnehmer in die Ermittlung der Rückwärtsfahrterkennung einzubinden, wenn diese über eine Fahrzeug zu Fahrzeug-Kommunikation verfügen. Auch weiter Rückwärtsfahrterkennungssensoren, wie z.B. Sensoren die den Rückwärtsgang, die Ansteuerung der Rückfahrtleuchte oder den Wahlhebel für Rückwärtsgang erkennen, können zur Erkennung einer Rückwärtsfahrt oder zu deren Plausibilisierung eingesetzt werden. Dabei ist zu Berücksichtigen, dass mittels dieser weiteren Sensoren nicht alleine eine Rückwärtsfahrt sicher erkannt werden kann, da z.B. auch ohne einen eingelegten Rückwärtsgang ein Fahrzeug bergab rückwärts fahren kann.

Das Problem wird auch mit einem unfallvermeidenden Schutzsystem in einem Kraftfahrzeug, welches eine Umfeldsensorik enthält, dadurch vorteilhaft gelöst, dass eine Fahrrichtungserkennung des Kraftfahrzeugs mit dem unfallvermeidenden Schutzsystem vorgesehen ist und das unfallvermeidende Schutzsystem mindestens einen Rückwärtsfahrterkenner, vorzugsweise einen Beschleunigungssensor und/oder einen Umfeldsensor, zur Rückwärtsfahrtermittlung aufweist. Unter Rückwärtsfahrterkenner werden alle Sensoren verstanden, deren Signal unmittelbar oder in einem Modell dazu verwendet werden können, eine Rückwärtsfahrt zu ermitteln.

Ausführungsbeispiele der Erfindung sind in der Zeichnung dargestellt und werden im Folgenden näher beschrieben.

**Kurze Beschreibung der Figuren**

Von den Figuren zeigt:

Fig. 1    eine schematische Blockdarstellung eines Kraftfahrzeug mit einem erfindungsgemäß ausgestalteten Sicherheitssystem,

Fig. 2    eine typische Verteilung von Relativgeschwindigkeiten von detektierten Umfeldobjekten bei einer Rückwärtsfahrt mit einem Umfeldsensor an der Fahrzeugfront,

Fig. 3    eine typische Verteilung von Relativgeschwindigkeiten von detektierten Umfeldobjekten bei einer Vorwärtsfahrt mit einem Umfeldsensor an der Fahrzeugfront

**Darstellung von Ausführungsbeispielen**

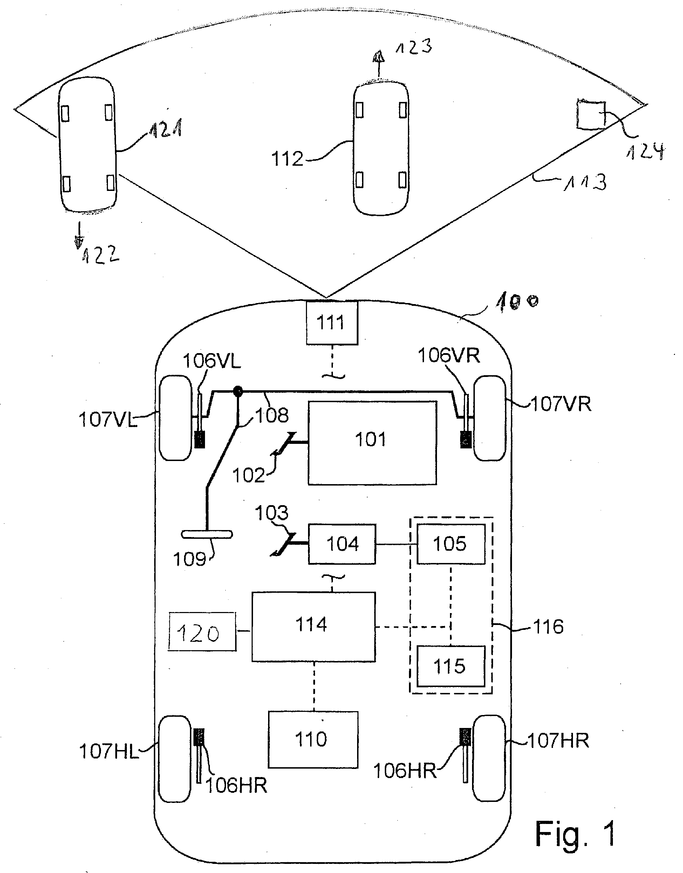

In Figur 1 ist ein Kraftfahrzeug 100 dargestellt, welches über einen Antriebsmotor 101 verfügt, der von dem Fahrer des Kraftfahrzeugs 100 mittels eines Fahrpedals 102 gesteuert wird. Ein von dem Antriebsmotor 101 bereitgestelltes Antriebsmoment wird über einen in der Figur nicht dargestellten Antriebsstrang an zwei oder alle vier Fahrzeugräder 107VL, 107VR, 107HL, 107HR übertragen, um das Kraftfahrzeug 100 anzutreiben. In der beispielhaften Darstellung sind die Vorderräder 107VL, 107VR des Kraftfahrzeugs 100 lenkbar ausgeführt und über einen Lenkstrang 108 mit einem von dem Fahrer des Kraftfahrzeugs 100 bedienbaren Lenkrad 109 verbunden. Zudem verfügt das Kraftfahrzeug 100 über eine Bremsanlage, die beispielsweise als hydraulische Bremsanlage ausgeführt ist. Von dem Fahrer des Kraftfahrzeugs 100 wird die Bremsanlage mittels eines Bremspedals 103 betätigt. Aufgrund einer Betätigung des Bremspedals 103 wird über einen in der Figur nicht dargestellten Bremskraftverstärker ein Bremsdruck in einem Hauptzylinder 104 aufgebaut. Über eine Hydraulikeinheit 105 kann der Bremsdruck an die Radbremsen 106VL, 106VR, 106HL, 106HR übertragen werden. Hierfür sind Hydraulikleitungen vorgesehen, die aus Gründen der Übersichtlichkeit in Figur 1 nicht dargestellt sind. Die Radbremsen 106VL, 106VR, 106HL, 106HR umfassen einen fahrzeugfest angebrachten Bremskolben, der gegen eine radfest montierte Bremsscheibe gepresst wird, wenn die Radbremsen 106VL, 106VR, 106HL, 106HR mit Druck beaufschlagt werden, wodurch ein Bremsmoment erzeugt wird. Die Hydraulikeinheit 105 ist in einer dem Fachmann an sich bekannten Art ausgeführt und ermöglicht eine fahrerunabhängige Einstellung des Bremsdrucks in den Radbremsen 106VL, 106VR, 106HL, 106HR. Insbesondere kann der Bremsdruck in den Radbremsen 106VL, 106VR, 106HL, 106HR mittels der Hydraulikeinheit 105 selbsttätig erhöht werden.

Ferner verfügt das Kraftfahrzeug 100 über eine Fahrzustandssensorik 110. Diese umfasst insbesondere Raddrehzahlsensoren, aus deren Signalen die Längsgeschwindigkeit des Kraftfahrzeugs 100 bestimmt werden kann, einen Gierratensensor zur Bestimmung der Gierrate des Kraftfahrzeugs 100 und gegebenenfalls einen Quer- und/oder Längsbeschleunigungssensor zum Bestimmen der Quer- und Längsbeschleunigung des Kraftfahrzeugs 100. Vorzugsweise umfasst die Fahrzustandssensorik 110 ferner einen innerhalb des Lenkstrangs 108 angeordneten Lenkwinkelsensor zur Erfassung des Einschlagswinkels der lenkbaren Vorderräder 107VL, 107VR. Mithilfe der Messdaten der Fahrzustands+sensorik 110 lässt sich insbesondere der jeweils aktuelle fahrdynamische Zustand des Kraftfahrzeugs 100 bestimmen. Über die Fahrzustandssensorik 110 hinaus weist das Kraftfahrzeug 100 zudem Sensoren auf, mittels derer der Betriebszustand einzelner Fahrzeugkomponenten ermittelt werden kann. Hierbei handelt es sich insbesondere um einen Fahrpedalsensor zum Erfassen der Fahrpedalstellung sowie einen Drucksensor zum Erfassen des in dem Hauptzylinder 104 der Bremsanlage von dem Fahrer eingestellten Bremsdrucks. Anstelle des Drucksensors kann auch ein Pedalwegsensor vorgesehen werden, der die Stellung des Bremspedals 103 erfasst. Mittels der letztgenannten Sensoren kann insbesondere das Verhalten des Fahrers bei der Längsführung des Kraftfahrzeugs 100 ermittelt werden.

Zur Erfassung von Umfeldobjekten 112, 121 , 124 im Umfeld des Kraftfahrzeugs 100 verfügt dieses zudem über eine Umfeldsensorik 111. Die Umfeldsensorik 111 umfasst beispielsweise einen oder mehrere Radarsensor(en) mit einem Erfassungsbereich 113, der einem Raumwinkelbereich vor dem Kraftfahrzeug 100 entspricht. Bei dem Radarsensor kann es sich beispielsweise um den Sensor eines in dem Kraftfahrzeug 100 vorgesehenen ACC-Systems (ACC: Adaptive Cruise Control) zur automatischen Abstandsregelung handeln, der innerhalb der vorliegenden Erfindung eine Mehrwertfunktion ausführen kann. Alternativ oder zusätzlich zu dem Radarsensor kann die Umfeldsensorik 111 beispielsweise einen Infrarot- oder Videosensor enthalten. Ferner kann der Erfassungsbereich 113 der Umfeldsensorik 111 mittels geeigneter Umfeldsensoren auch derart erweitert werden, dass er zusätzlich das seitliche und/oder hintere Umfeld des Kraftfahrzeugs 100 umfasst. Bei den in dem Erfassungsbereich 113 befindlichen und mittels der Umfeldsensorik 111 detektierten Umfeldobjekten 112, 121, 124 die im Hinblick auf eine mögliche Kollision mit dem Kraftfahrzeug 100 und bezüglich der Ermittlung einer Rückwärtsfahrt relevant sind, handelt es sich um weitere Kraftfahrzeuge 112, 121, die sich zusammen mit dem Kraftfahrzeug 100 im Straßenverkehr bewegen und um stehende Objekte 124. Stehende Objekte sind in der Regel geparkte Fahrzeuge, Verkehrsschilder, Leitplanken, Fahrbahnbegrenzungen, Bäume und dergleichen. Zur sprachlichen Unterscheidung von den weiteren Kraftfahrzeugen 112, 121 wird das Kraftfahrzeug 100 daher im Folgenden auch als Egofahrzeug 100 bezeichnet.

Mittels der Umfeldsensorik 111 werden die Relativposition und Relativgeschwindigkeiten $v_{rel}$ der in ihrem Erfassungsbereich 113 befindlichen Umfeldobjekte 112, 121, 124 in Bezug auf das Egofahrzeug 100 bestimmt. Als Position der Umfeldobjekte 112, 121, 124 wird dabei die Position von Bezugspunkten der Umfeldobjekte 112, bei denen es sich üblicherweise um den anhand der Sensordaten geschätzten Mittelpunkt der dem Egofahrzeug 100 zugewandten Objektfronten handelt. Anhand der Sensordaten wird in einer Auswertelektronik der Umfeldsensorik 111 zudem eine erste Klassifizierung der erfassten Umfeldobjekte 112, 121, 124 vorgenommen. Dabei werden beispielsweise anhand der erfassten Bewegung der Umfeldobjekte 112, 121 und anhand der erfassten Umrisse der Umfeldobjekte 112, 121 die sich im Straßenverkehr bewegenden Umfeldobjekte 112, 121 von solchen Umfeldobjekten 124 unterschieden, die sich am Fahrbahnrand bzw. neben der Fahrbahn befinden.

Falls die Umfeldsensorik 111 einen Videosensor umfasst, können zudem Fahrspurmarkierungen erfasst werden, und die Auswertelektronik der Umfeldsensorik 111 kann aus deren Verlauf den Verlauf der Fahrbahn ermitteln, auf der sich das Egofahrzeug 100 und die am Straßenverkehr teilnehmenden Umfeldobjekte 112 bewegen. Falls die Fahrspurmarkierungen nicht mittels der eingesetzten Umfeldsensorik 111 erfasst werden können, kann der Fahrbahnverlauf unter Heranziehung von Umfeldobjekten 124, welche die Fahrbahn begrenzen - wie etwa Leitplanken - geschätzt werden. Über diese gegebenenfalls vorgesehene Verwendung hinaus werden die Umfeldobjekte 124, die nicht am Straßenverkehr teilnehmen, zur Erkennung einer Rückwärtsfahrt des Egofahrzeugs 100 betrachtet. Im Folgenden bezeichnet der Begriff Umfeldobjekte daher alle Objekte im Umfeld des Egofahrzeugs 100, von denen angenommen wird, dass sie sich im Erfassungsbereich 113 der Umfeldsensorik befinden.

Im Folgenden wird davon ausgegangen, dass die Umfeldsensorik 111 zumindest einen in Fahrzeuglängsrichtung nach vorne gerichteten Radarsensor umfasst.

Darüber hinaus stellt die Umfeldsensorik 111 Messwerte, wie etwa den Rückstreuquerschnitt eines erfassten Umfeldobjekts 112, 121, 124 bereit, welche Rückschlüsse über die Qualität der Detektion des Umfeldobjekts 112, 121, 124 zulassen.

Die mittels der zuvor beschriebenen Sensoren erfassten Daten werden innerhalb des Egofahrzeugs 100 einem präventiv wirkenden Schutzsystem 114 zugeführt, welches anhand dieser Daten potenziell kritische Fahrsituationen erkennt und in derartigen Fahrsituationen Steuerbefehle zur Ansteuerung von Sicherheitseinrichtungen 116 des Egofahrzeugs 100 bestimmt.

Die Sicherheitseinrichtungen 116 umfassen die Hydraulikeinheit 105, mit der die Bremsanlage des Egofahrzeugs 100 beeinflusst werden kann. Dabei kann etwa ein automatischer Bremsvorgang durchgeführt werden, oder die Radbremsen 106VL, 106VR, 106HL, 106HR können für einen nachfolgenden Bremsvorgang vorkonditioniert werden, indem beispielsweise ein geringer Bremsdruck aufgebaut wird, durch den ein Lüftspiel zwischen den Bremskolben und der Bremsschreibe verringert bzw. beseitigt wird. Zudem ist es möglich, Schwellen zur Auslösung bestimmter Funktionen der Hydraulikeinheit 105 zu beeinflussen, um diese Funktionen im Falle einer drohenden Kollision rascher auslösen zu können. Ein Beispiel für eine derartige Funktion ist ein an sich bekannter hydraulischer Bremsassistent (HBA), bei dem ein von dem Fahrer in der Bremsanlage eingestellter Bremsdruck in einer kritischen Fahrsituation auf einen Maximalwert erhöht wird, um eine maximale Verzögerung zu gewährleisten. Die Funktion wird üblicherweise aktiviert, wenn der Bremspedalgradient, d.h. die Geschwindigkeit, mit welcher der Fahrer das Bremspedal eintritt, oder Bremsdruckgradient, d.h. die Änderungsrate des Bremsdrucks innerhalb eines Hauptzylinders 104 der Bremsanlage, einen vorgegebenen Auslöseschwellenwert überschreitet. Durch eine Absenkung dieses Auslöseschwellenwerts kann der HBA rascher ausgelöst werden, so dass sich der Bremsweg des Egofahrzeugs 100 verkürzt. Zusätzlich oder zusammen mit der Hydraulikeinheit 105 kann eine automatisch ansteuerbare Lenkung, z.B. eine Überlagerungslenkung, beeinflusst werden. Damit kann eine selbsttätige Lenkung durchgeführt werden, um dem Umfeldobjekt 112 auszuweichen.

Weitere Sicherheitseinrichtungen 116 des Egofahrzeugs 100 sind in Figur 1 schematisch in dem Block 115 zusammengefasst. Die Sicherheitseinrichtungen 115 umfassen Einrichtungen zur optischen, akustischen oder haptischen Warnung des Fahrers vor einer möglichen Kollision mit einem Umfeldobjekt 112. Optische Warnungen können beispielsweise mittels eines von dem Fahrer des Egofahrzeugs 100 einsehbaren Displays und/oder mittels einer Warnleuchte ausgegeben werden, die etwa in einer Armaturentafel des Egofahrzeugs 100 angeordnet ist. Akustische Warnungen umfassen beispielsweise Warntöne, die mittels eines Lautsprechers bzw. mittels eines in dem Egofahrzeug 100 vorgesehenen Audiosystems ausgegeben werden können. Haptische Warnungen können etwa mittels eines in dem Lenkstrang 108 angeordneten Lenkaktors ausgegeben werden, indem dieser das Lenkrad 109 kurzzeitig mit einem Drehmoment beaufschlagt. Alternativ oder zusätzlich kann das Egofahrzeug 100 auch durch eine kurzzeitige mittels der Hydraulikeinheit 105 ausgeführten Bremsdruckerhöhung abgebremst werden, so dass ein Bremsruck verursacht wird, welcher den Fahrer auf eine Gefahrsituation aufmerksam macht.

Darüber hinaus umfassen die Sicherheitseinrichtungen 115 vorzugsweise eine oder mehrere Einrichtungen zur Erhöhung der passiven Fahrzeugsicherheit. Insbesondere können dabei reversible Gurtstraffer eingesetzt werden, mit denen die von den Fahrzeuginsassen angelegten Sicherheitsgurte angezogen werden können, um die Fahrzeuginsassen im Falle einer Kollision besser sichern zu können. Darüber hinaus können in dem Egofahrzeug 100 Einrichtungen zum Verstellen der Sitzposition der Fahrzeuginsassen vorgesehen werden, welche die Fahrzeuginsassen durch eine Verstellung der Sitze in eine günstige Position bringen, sowie Einrichtungen, mit denen Fenster und/oder ein Schiebedach des Egofahrzeugs 100 bei einer drohenden Kollision geschlossen werden können, um eine geschlossene Sicherheitszelle des Egofahrzeugs 100 zu schaffen, die den Fahrer vor Verletzungen schützt. Ferner können die Sicherheitseinrichtungen 115 Aktuatoren zur Vorkonditionierung von irreversiblen Sicherheitseinrichtungen, wie Airbags und/oder pyrotechnischen Gurtstraffern, umfassen, welche die in der Regel auf Längsbeschleunigungssignalen basierenden Auslöseschwellen der irreversiblen Sicherheitseinrichtungen im Falle einer möglichen Kollision herabsetzen, so dass die irreversiblen Sicherheitseinrichtungen bei einer Kollision rascher ansprechen.

## 1. Rückwärtsfahrterkennung auf Basis eines Längsbeschleunigungssignals

Das präventiv wirkende Schutzsystem 114 verwendet nach einem Ausführungsbeispiel das Längsbeschleunigungssignal eines Längsbeschleunigungssensors 120 zur Erkennung einer Rückwärtsfahrt. Längsbeschleunigungssensoren 120 kommen in Airbagsystemen, für Allradfahrzeuge in elektronischen Bremssystemen und in weiteren elektronischen Sicherheits- oder Fahrerassistenzsystemen von Kraftfahrzeugen zur Anwendung. Das gemessene Längsbeschleunigungssignal $a_{sensor}$ ist vorzeichenbehaftet und weist einen stationären und einen dynamischen Anteil auf.

Die Erfassung des stationären Anteils der auf das Egofahrzeug 100 wirkenden Längsbeschleunigung des Sensorsignals $a_{sensor}$ resultiert auf einem nicht horizontal ausgerichteten Längsbeschleunigungssensor 120. Die Gründe hierfür können im Einbau des Sensors 120 oder in einer Neigung $\alpha$ der Fahrbahn in Längsrichtung begründet sein. Eine auf der Hangabtriebsbeschleunigung beruhender Anteil beruht z.B. auf g*sin($\alpha$), mit g = Erdbeschleunigung und $\alpha$ = Längsneigungswinkel des Fahrzeugs. Die Erdbeschleunigung nimmt üblicherweise einen Wert von g ≈ 9,81 m/s$^2$ an, der auch hier zugrunde gelegt wird.

Zur Bestimmung des stationären Anteils wird der im Fahrzeugstillstand mit dem Längsbeschleunigungssensor 120 gemessene Wert der Beschleunigung $a_{stationär}^{0}$ Vorzeichenbehaftet in einem Speicher des präventiv wirkenden Schutzsystems 114 abgelegt.

Während des Anfahrens wird die Fahrzeuggeschwindigkeit $v_{a\_ego}$ des Egofahrzeugs 100 aus der gemessenen Längsbeschleunigung $a_{sensor}$ durch Integration berechnet. Wichtig ist, dass das gemessene Längsbeschleunigungssignal $a_{sensor}$ vorher um den stationären Anteil $a_{stationär}^{0}$ bereinigt wird. D.h.

$$v_{a\_ego}(t) = \int \left( a_{sensor}(t) - a_{stationär}^{0} \right).$$

Es wird somit das Modellsignal der Fahrzeuggeschwindigkeit $v_{a\_ego}$ des Egofahrzeugs 100 aus

$$\int \left( a_{sensor}(t) - a_{stationär}^{0} \right)$$ während einer Zeit t des Anfahrvorganges gebildet. Dieses Modellsignal der Fahrzeuggeschwindigkeit $v_{a\_ego}$ bildet die Anteile der Beschleunigung und der Verzögerung während einer Zeitspanne dt ab. Weist die Fahrzeuggeschwindigkeit $v_{a\_ego}$ ein positives Vorzeichen auf, befindet sich das Fahrzeug voraussichtlich in einer Vorwärtsfahrt, bei umgekehrten negativen Vorzeichen liegt voraussichtlich eine Rückwärtsfahrt vor.

Zur Plausibilisierung der aus

$$\int \left( a_{sensor}(t) - a_{stationär}^{0} \right)$$ ermittelten Fahrzeuggeschwindigkeit $v_{a\_ego}$ wird diese daraufhin untersucht, ob der Betrag von $|v_{a\_ego}|$ innerhalb von bestimmten, vorgegebenen Geschwindigkeitsbereichen von $|v_{wh\_ego}|$ liegt, d.h. ob die aus dem Längsbeschleunigungssignal ermittelte Fahrzeuggeschwindigkeit $|v_{a\_ego}|$ in einem zulässigen Toleranzbereich der aus den Raddrehzahlsensoren ermittelten Fahrzeuggeschwindigkeit $|v_{wh\_ego}|$ liegt. Hierzu wird der Betrag der aus allen vier Radsignalen gebildeten Fahrzeuggeschwindigkeit $|v_{wh\_ego\_1-4}|$ oder die minimale Radgeschwindigkeit eines Rades $|v_{wh\_ego\_1}|$ ermittelt. Als Gütemaß für die vorstehende Berechnung von $v_{a\_ego}$ wird die Differenz der Beträge der berechneten Fahrzeuggeschwindigkeiten herangezogen:

$$Q(t) = \left| v_{a\_ego}(t) \right| - \left| v_{wh\_ego}(t) \right|.$$

Betragsmäßig kleine Werte von Q sprechen für eine relativ gute Verlässlichkeit der aus der Längsbeschleunigung in o.g. Weise berechneten Fahrzeuggeschwindigkeit $v_{a\_ego}$. Insbesondere Weisen kleine Werte darauf hin, dass sich die Fahrbahnneigung während der Berechnung nicht stark geändert hat.

Überschreitet die Fahrzeuggeschwindigkeit betragsmäßig eine festgelegte Schwelle (z.B. 5 km/h) und unterschreitet das Gütemaß Q einen bestimmten Wert (z.B. 2 km/h), so wird die Fahrtrichtung aus dem Vorzeichen von $v_{a\_ego}$ bestätigt.

Die Verbindung des präventiv wirkenden Schutzsystems 114 zu den Sicherheitssystemen 116 wird bei bestätigter Rückwärtsfahrt unterbrochen oder eine Ansteuerung der in die Fahrzeugdynamik eingreifenden Aktuatoren durch das Schutzsystem 114 unterbunden. Selbstverständlich kann das Schutzsystem 114 auch mit einer Logik, die nach einer Ermittlung der Vorwärtsfahrt, die Sicherheitssysteme 116 ansteuern.

Beim nächsten Stillstand des Egofahrzeugs 100 wird das Verfahren neu gestartet.

Weitere Informationen, wie z.B. Signale die den Rückwärtsgang, die Ansteuerung der Rückfahrtleuchte oder den Wahlhebel für Rückwärtsgang anzeigen, können auch zur Plausibilisierung der jeweils anderen, sicheren Erkennung einer Rückwärtsfahrt verwendet werden.

## 2. Rückwärtsfahrterkennung auf Basis der Umfeldsensorik

Umfeldsensoren kommen in Fahrerassistenzsystemen, wie adaptiven Tempomaten und dem präventiv wirkenden unfallvermindernden bzw. -vermeidenden Schutzsystemen 114, zum Einsatz. Sie erkennen sich mit dem Egofahrzeug 100 im Straßenverkehr bewegende und stehende Umfeldobjekte 112, 121, 124, deren Position und Relativgeschwindigkeit $v_{rel}$ auf Basis von Bildern bzw. Reflexionen. 112 bezeichnet dabei ein Fahrzeug, das sich bei einer Vorwärtsfahrt 123 mit dem Egofahrzeug 100 in die gleiche Richtung bewegt, während sich das Fahrzeug 121 bei einer Rückwärtsfahrt des Egofahrzeugs 100 in die gleiche Richtung 122 bewegt. "Stehende Objekte", wie z.B. 124, sind solche, welche sich relativ zur Strasse nicht bewegen.

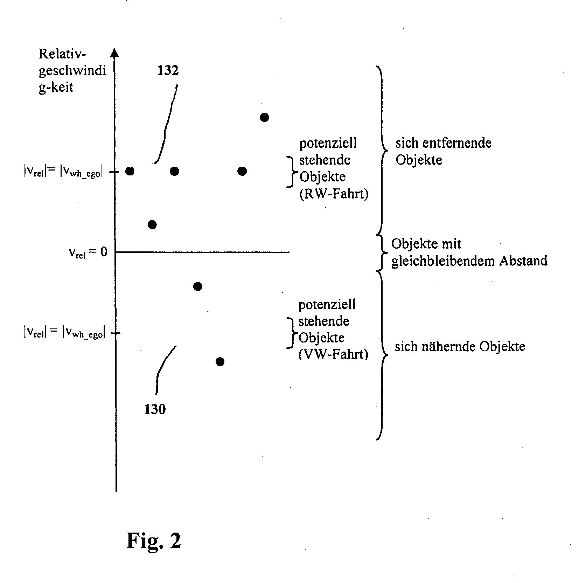

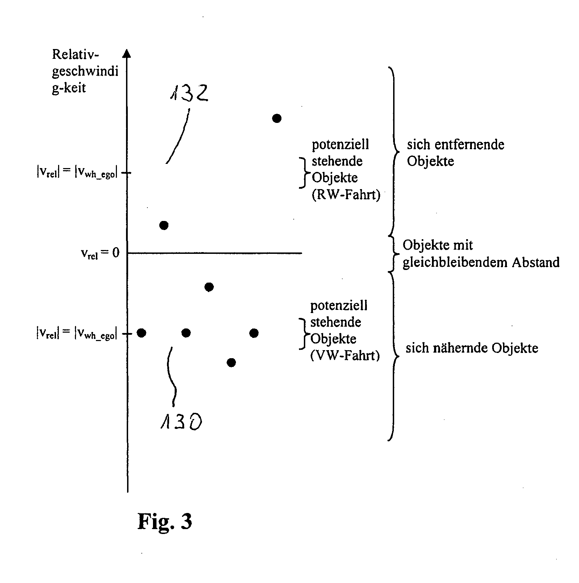

Figuren 2 und 3 zeigen einen schematischen Ablauf der Ermittlung einer Rückwärtsfahrt bzw. einer Vorwärtsfahrt mit dem an der Fahrzeugfront angeordneten Umfeldsensor 111.

Innerhalb des präventiv wirkenden Schutzsystems 114 kann der Betrag der Geschwindigkeit des Egofahrzeugs 100 aus allen vier Radsensorsignalen $|v_{wh\_ego\_1-4}|$ oder aus mindestens einem Radsensorsignal $|v_{wh\_ego\_1}|$ ermittelt werden. Die Ermittlung der Fahrzeuggeschwindigkeit kann selbstverständlich auch von Sicherheitseinrichtungen 116, wie Antiblockiersystemen oder ESP-Systemen, zur Verfügung gestellt werden, die die Fahrzeuggeschwindigkeit ebenfalls aus den Raddrehzahlsignalen berechnen.

Mit der Umfeldsensorik 111 werden die Umfeldobjekte 112, 121 und 124 im Umfeld des Egofahrzeugs 100 erkannt und während eines bestimmten Zeitraums dt beobachtet. Es wird die Relativgeschwindigkeit $v_{rel}$ der detektierten Umfeldobjekte 112, 121, 124 zum Egofahrzeug 100 in Fahrzeuglängsrichtung und deren zeitlicher Verlauf gemessen und ausgewertet. Dabei werden während der Fahrt bzw. im Stillstand alle Umfeldobjekte 112, 121, 124 deren betragsmäßige Relativgeschwindigkeit $|v_{rel}|$ über den bestimmten Zeitraum dt identisch mit der betragsmäßigen Fahrtzeuggeschwindigkeit $|v_{wh\_ego\_1-4}|$

oder $|v_{wh\_ego\_1}|$ ist, als "stehende Umfeldobjekte 124" klassifiziert.

Eine Beobachtung über einen gewissen Zeitraum ist nötig, da Umfeldobjekte 124 auch dann kurzzeitig eine Relativgeschwindigkeit aufweisen können, welche betragsmäßig der Geschwindigkeit des Egofahrzeugs 100 entspricht, wenn sie nicht stehen. Dies kann immer dann auftreten, wenn das beobachtete Umfeldobjekt, z.B. 112 oder 121, sich zufällig mit der zweifachen Geschwindigkeit des Egofahrzeugs 100 in Richtung von dessen Längsachse bewegt. Diese Situation wird in der Regel aber nicht über einen längeren Zeitraum auftreten. Insbesondere dann nicht, wenn sich die Geschwindigkeit des Egofahrzeuges 100 ändert.

Die Dauer des Zeitraums dt bis zur Klassifizierung als stehend kann verkürzt werden, wenn sich die Geschwindigkeit $v_{wh\_ego}$ des Egofahrzeugs 100 ändert, die Geschwindigkeitsbedingung zur Klassifizierung als "stehendes Umfeldobjekt 124" aber weiterhin erfüllt bleibt, d.h. dass sich die betragsmäßige Relativgeschwindigkeit des Umfeldobjektes 124 entsprechend weiterhin identisch mit der "veränderten" Fahrzeuggeschwindigkeit $v_{wh\_ego}$ des Egofahrzeugs ist.

Während der Fahrt des Egofahrzeugs 100 werden "stehende" Umfeldobjekte 124, anhand von Relativgeschwindigkeit und/oder Abstand weiter klassifiziert. Umfeldobjekte 124 bei denen sich der Abstand vom Egofahrzeug 100 vergrößert, werden als "stehend, sich entfernend" in 132 klassifiziert. Die "stehenden" Umfeldobjekte, bei denen sich der Abstand vom Egofahrzeug verringert, werden als "stehend / sich nähernd" in 130 klassifiziert.

In den Figuren 2 und 3 ist eine entsprechende Einordnung in Klassen schematisch dargestellt, wobei die Umfeldobjekte 112, 121, 124 durch Punkte dargestellt sind. Dabei sind in Figur 2 stehende, sich dem Egofahrzeug 100 entfernende Umfeldobjekte 124, bei denen die Beträge $|v_{rel}| = |v_{wh\_ego}|$ ist, in der Klasse 132 eingeordnet, während keine Umfeldobjekte in der Klasse 130, also "stehend, sich nähernd", klassifiziert sind. Die zwischen den Klassen 130 und 132 liegenden Umfeldobjekte 112, 121 erfüllen nicht die Bedingung für ein stehendes Umfeldobjek $|v_{ref}| = |v_{wh\_ego}|$.

Figur 3 zeigt eine gegenüber Figur 2 andere Einordnung der stehenden Umfeldobjekte 124. Hier nähert sich das Egofahrzeug 100 den stehenden Umfeldobjekten 124. Die stehenden Umfeldobjekte sind in der Klasse 130 eingeordnet.

Das präventiv wirkenden Schutzsystems 114 ermittelt nun unter folgenden Bedingungen eine Rückwärtsfahrt bei einem in dem vorliegenden Ausführungsbeispiel vorgesehenen Frontsensor 111:

- Die Anzahl der als "stehend / sich entfernend" klassifizierten Umfeldobjekte 124 übersteigt seit dem letzten Fahrzeugstillstand eine bestimmte Anzahl und/oder

- Die Zeitdauer in der Umfeldobjekte 124 nach dem letzten Fahrzeugstillstand als "stehend / sich entfernend" klassifiziert wurden übersteigt einen bestimmten Zeitraum und

• Die Zeitdauer in der Umfeldobjekte 124 nach dem letzten Fahrzeugstillstand als "stehend / sich nähernd" klassifiziert wurden liegt unter einem bestimmten Zeitraum.

Es ist selbstverständlich und bedarf keiner nähern Beschreibung, dass das zuvor beschriebene Verfahren mit einem Frontsensor auch mit einem am Heck vorgesehenen Umfeldsensor ausgeführt werden kann, wobei sich eine umgekehrte Logik bezüglich sich entfernender bzw. sich nähernder Umfeldobjekte 124 ergibt.

Das Verfahren kann beim Anfahren von einer Vorwärtsfahrt oder umgekehrt von einer Rückwärtsfahrt ausgehen. Ausgehend von einer Rückwärtsfahrt, wird eine Vorwärtsfahrt oder ausgehend von einer Vorwärtsfahrt, wird eine Rückwärtsfahrt durch Auswertung der Umfeldsignale erkannt.

Nach einem weiteren Ausführungsbeispiel, wird beispielsweise von einem anderen im Umkreis des Egofahrzeugs 100 befindlichen Fahrzeugs erkannt und über eine Fahrzeug zu Fahrzeug Kommunikation dem Egofahrzeug 100 als Information zur Verfügung gestellt, ob das Fahrzeug vorwärts oder rückwärts fährt.

**Patentansprüche**

1. Verfahren zum Erkennen einer Fahrtrichtung in einem Fahrzeug mit einem präventiv wirkenden Schutzsystem (114),
mit den Schritten

     a) Erkennen eines Umfeldobjekts (112, 121, 124) vor dem Fahrzeug in der Richtung des Fahrzeugs,
     b) Ermitteln eines möglichen Kontaktes des Fahrzeugs (100) mit dem Umfeldobjekt in Abhängigkeit von der relativen Position und Geschwindigkeit zueinander,
     c) Auslösen eines fahrerunabhängigen Brems- und/oder Lenkvorganges in Abhängigkeit von dem Ermittlungsergebnis bzgl. eines möglichen Kontakts mit dem Umfeldobjekt,
     d) Ermitteln der Fahrtrichtung des Fahrzeugs mit dem präventiv wirkenden Schutzsystem (114) oder einem mit dem präventiv wirkenden Schutzsystem verbundenen internen oder externen Sicherheitseinrichtung (116), und wenn eine Rückwärtsfahrt erkannt wird, Verhindern oder Abbrechen des fahrerunabhängigen Brems- und/oder Lenkvorganges, indem eine Rückwärtsfahrt anhand von Signalen eines als Frontsensor vorgesehenen Umfeldsensors (111) erkannt wird, **dadurch gekennzeichnet, dass** mit dem Umfeldsensor (111) Umfeldobjekte (112, 121, 124) erkannt, während eines bestimmten Zeitraums dt beobachtet und alle Umfeldobjekte (112, 121, 124), deren betragsmäßige Relativgeschwindigkeit über den bestimmten Zeitraum dt als identisch mit der betragsmäßigen Fahrzeuggeschwindigkeit ist, als stehende Umfeldobjekte klassifiziert werden, stehende Umfeldobjekte während der Fahrt des Fahrzeugs (100) anhand von Relativgeschwindigkeit und/oder Abstand weiter als "stehend, sich entfernend" (132) oder "stehend, sich nähernd" (130) klassifiziert werden, und eine Rückwärtsfahrt ermittelt wird, wenn die Anzahl der als "stehend/sich entfernend" klassifizierten Umfeldobjekte (124) seit dem letzten Fahrzeugstillstand eine bestimmte Anzahl übersteigt und/oder die Zeitdauer, in der Umfeldobjekte (124) nach dem letzten Fahrzeugstillstand als "stehend/sich entfernend" klassifiziert wurden, einen bestimmten Zeitraum übersteigt und die Zeitdauer, in der Umfeldobjekte (124) nach dem letzten Fahrzeugstillstand als "stehend/sich nähernd" klassifiziert wurden, unter einem bestimmten Zeitraum liegt.

2. Kraftfahrzeug mit einem präventiv wirkenden Schutzsystem zur Durchführung des Verfahrens gemäß Anspruch 1, welches mehrere Sicherheitseinrichtungen und mindestens eine Umfeldsensorik umfasst, **dadurch gekennzeichnet, dass** eine Fahrrichtungserkennung des Fahrzeugs (100) mit dem präventiv wirkenden Schutzsystem (114) vorgesehen ist und das Schutzsystem (114) mindestens einen Umfeldsensor (111) zur Rückwärtsfahrtermittlung aufweist.

**Claims**

1. A method for determining a direction of travel in a vehicle by means of a preventive protection system (114), comprising the steps of

     a) detecting a nearby object (112, 121, 124) in front of the vehicle in the direction of the vehicle,
     b) determining any potential contact of the vehicle (100) with the nearby object based on the relative position and speed to each other,
     c) initiating a driver-independent braking and/or steering action in accordance with the result obtained in respect of potential contact with the nearby object,
     d) determining the direction of travel of the vehicle by means of the preventive protection system (114) or an internal or external safety device (116) that is connected to the preventive protection system, and if travel in reverse is detected, preventing or interrupting the driver-independent braking and/or steering action, wherein travel in reverse is detected using signals of a surroundings sensor (111) that is provided as a front sensor, **characterized in that** the surroundings sensor (111) is used to detect nearby objects (112, 121, 124), to observe them during a defined period of time dt, and to classify all nearby objects (112, 121, 124) whose relative speed value is the same as the relative speed value of the vehicle during the defined period of time dt as nearby objects at rest, to further classify nearby objects at rest as "at rest, moving away" (132) or "at rest, coming nearer" (130) during travel of the vehicle (100) using the relative speed and/or distance, and to determine travel in reverse if the number of nearby objects (124) classified as at rest / moving away" exceeds a defined number since the vehicle was last at rest and/or the time during which nearby objects (124) have been classified as "at rest / moving away" since the vehicle was last at rest exceeds a defined period of time and the time during which nearby objects (124) have been classified as "at rest / coming nearer" since the vehicle was last at rest is less than a defined period of time.

2. A motor vehicle provided with a preventive protection system for carrying out the method according to claim 1, which comprises several safety devices and at least one surroundings sensor system, **characterized in that** the preventive protection system (114) is intended to be used to determine the direction of travel of the vehicle (100) and the protection system (114) comprises at least one surroundings sensor (111) for determining travel in reverse.

## Revendications

1. Procédé d'identification d'une direction de déplacement dans un véhicule avec un système de protection (114) à action préventive, comprenant les étapes suivantes :

a) identification d'un objet environnant (112, 121, 124) devant le véhicule dans la direction du véhicule,
b) détermination d'un contact possible du véhicule (100) avec l'objet environnant en fonction de la position et vitesse relatives l'un par rapport à l'autre,
c) déclenchement d'un processus de freinage et/ou de braquage indépendant du conducteur en fonction du résultat de la détermination concernant un contact possible avec l'objet environnant,
d) détermination de la direction de déplacement du véhicule avec le système de protection (114) à action préventive ou avec un dispositif de sécurité (116) interne ou externe raccordé au système de protection (114) à action préventive et, quand un déplacement en marche arrière est identifié, empêchement ou interruption du processus de freinage et/ou de braquage indépendant du conducteur par le fait qu'un déplacement en marche arrière est identifié à l'aide de signaux d'un capteur d'environnement (111) prévu en tant que capteur frontal, **caractérisé en ce que**, avec le capteur d'environnement (111), des objets environnants (112, 121, 124) sont identifiés, observés pendant une durée définie dt, et tous les objets environnants (112, 121, 124) dont la valeur de la vitesse relative pendant la durée définie dt est identique à la valeur de vitesse du véhicule sont classés comme des objets environnants stationnaires, des objets environnants stationnaires sont, pendant le déplacement du véhicule (100), classés à l'aide de la vitesse relative et/ou de la distance également comme « stationnaires, s'éloignant » (132) ou « stationnaires, se rapprochant » (130), et un déplacement en marche arrière est déterminé quand le nombre des objets environnants (124) classés comme « stationnaires/s'éloignant » depuis le dernier arrêt du véhicule dépasse un nombre défini et/ou quand la durée pendant laquelle des objets environnants (124) ont été classés comme « stationnaires/s'éloignant » après le dernier arrêt du véhicule dépasse une durée définie, et quand la durée pendant laquelle des objets environnants (124) ont été classés comme « stationnaires/se rapprochant » après le dernier arrêt du véhicule est inférieure à une durée définie.

2. Véhicule automobile avec un système de protection (114) à action préventive pour la réalisation du procédé selon la revendication 1, qui comprend plusieurs équipements de sécurité et au moins un système de capteur d'environnement, **caractérisé en ce qu'**il est prévu une identification de la direction de déplacement du véhicule (100) avec le système de protection (114) à action préventive, et **en ce que** le système de protection (114) présente au moins un capteur d'environnement (111) pour la détermination du déplacement en marche arrière.

Fig. 1

Relativgeschwindi
g-keit

132

potenziell
$\}$ stehende
$\int$ Objekte
(RW-Fahrt)

sich entfernende
Objekte

$|v_{rel}| = |v_{wh\_ego}|$

$v_{rel} = 0$

Objekte mit
gleichbleibendem Abstand

$|v_{rel}| = |v_{wh\_ego}|$

potenziell
$\}$ stehende
$\int$ Objekte
(VW-Fahrt)

sich nähernde Objekte

130

# Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19515048 A1
- WO 2006042512 A1
- DE 10220566 A1
- US 3176294 A
- EP 1010596 A2